# EUROPÄISCHE PATENTSCHRIFT

(11) **EP 2 166 211 B1**
(45) Veröffentlichungstag und Bekanntmachung des Hinweises auf die Patenterteilung: **09.09.2015**
(21) Anmeldenummer: 09009313.9
(22) Anmeldetag: 17.07.2009
(51) Int. Cl.: F02B 37/007, F02B 37/013, F02M 25/07

(54) **Brennkraftmaschine mit Abgasrückführung**
Combustion engine with exhaust gas recirculation
Moteur à combustion interne avec recirculation des gaz d'échappement

(30) Priorität: 19.09.2008 DE 102008048035
(43) Veröffentlichungstag der Anmeldung: 24.03.2010
(73) Patentinhaber: MAN Truck & Bus AG, 80995 München (DE)
(72) Erfinder: Reisch, Stephan, 91154 Roth (DE)

(56) Entgegenhaltungen:
- WO-A2-2007/035972
- DE-A1- 2 544 471
- JP-A- 2000 356 136
- US-B1- 6 378 308

## Beschreibung

Die vorliegende Erfindung bezieht sich auf eine Brennkraftmaschine. Die Erfindung wird unter Bezugnahme auf einen Dieselmotor beschreiben, es wird jedoch darauf hingewiesen, dass die Erfindung auch auf andere Motorgattungen bspw. Ottomotoren anwendbar ist.

Derartige Brennkraftmaschinen werden im Stand der Technik permanent weiter entwickelt. Dabei gewinnt zunehmend auch die Einhaltung von Abgasgrenzwertstufen höheres Gewicht. In den Fällen, in denen es angestrebt ist, ohne eine aktive Abgasnachbehandlung wie beispielsweise einem SCR-System (Selected Catalytic Reduction) die Abgasgrenzwertstufen einzuhalten, ist es erforderlich, in allen relevanten Betriebspunkten des Motors ausreichend hohe Abgasrückführungsraten zur Verfügung zu stellen. Dabei sollten Abgasrückführungsraten bis über 50 % erreicht werden.

Wegen der teilweise erheblichen Anforderungen an die Dynamik und Leistungsdichte wird bei heutigen Gasrückführungsmotoren eine zweistufige Aufladung der Ladeluft vorgenommen. Die hierbei üblicherweise verwendete Abgasrückführungsvariante ist ein so genanntes Hochdruckabgasrückführungskonzept. Bei diesem Konzept entnimmt man Abgas im Abgasrohr vor der Hochdruckturbine (HDT) und leitet es anschließend, vorzugsweise durch einen Kühler hindurch, weiter in das Luftverteilerrohr des Motors. Dort vermischt sich das gekühlte Abgas mit der Ladeluft und steht dem Motor für die NOx - Reduzierung zur Verfügung. Dabei wird die zurückführbare Menge an Abgas maßgeblich durch das Druckgefälle im Abgasrohr vor der Turbine zu dem Druck der Ladeluft (an der Mündung des Abgasrückführungszuflusses im Luftverteilerrohr) bestimmt.

Um das erforderliche Druckgefälle bzw. die Abgasrückführungsmasse bei akzeptablen Lambda-Werten auch bei geringen Abgasmassenströmen in den unteren Drehzahl- und Lastbereichen zu ermöglichen, werden dabei die Hochdruck (HD)- und Niederdruck (ND)-turbinenquerschnitte vorrangig für diesen Betriebsbereich und daher verhältnismäßig klein ausgelegt.

In der Folge müssten insbesondere bei höheren Drehzahl- und Lastzuständen die Turbinen teilweise umblasen werden da sonst der Abgasgegendruck vor der Hochdruckturbine zu stark ansteigen würde. Dies führt wiederum zu Wirkungsgradeinbußen. Falls die Abgasrückführungsraten für zukünftige Grenzwertstufen weiter steigen, verschärft sich diese Problematik zunehmend. Genauer gesagt müssen in diesem Falle zur Erreichung noch höherer Abgasrückführungsraten insbesondere noch kleinere Turbinen noch früher umblasen werden.

Aus dem internen Stand der Technik der Anmelderin ist es auch bekannt, eine oder auch beide Turbinen als VTG (variable Turbinengeometrie) auszulegen. Dies führt jedoch andererseits auch zu bestimmten Nachteilen wie beispielsweise einer aufwendige Regelung, höheren Kosten und einer Verringerung der Standzeiten.

Die DE 198 37 978 B4 beschreibt eine turboaufgeladene Brennkraftmaschine. Diese Brennkraftmaschine weist eine Hochdruckstufe mit einer Hochdruckturbine und einem Verdichter auf sowie eine Niedrigdruckstufe mit einer der Hochdruckturbine nach geschalteten Niederdruckturbine und einem Verdichter. Dabei ist ein Prozessor vorgesehen, der bei geringer Last der Brennkraftmaschine unabhängig von deren Drehzahl die Expansionsarbeit durch Öffnen eines Bypasskanals größtenteils auf die Niederdruckturbine verlagert.

Aus der DE 198 53 360 A1 ist eine Brennkraftmaschine mit zwei Abgasturboladern bekannt. Dabei weist mindestens ein Abgasturbolader eine Abgasturbine mit variabler Turbinengeometrie auf. Damit werden auch im Falle dieser Druckschrift die Nachteile, die mit veränderlichen Geometrien einhergehen, in Kauf genommen.

Die DE 10 2004 038 172 A1 beschreibt eine Brennkraftmaschine. Diese Brennkraftmaschine verfügt über einen Ansaugtrakt mit einer ersten und einer zweiten Ansaugleitung, wobei diese Brennkraftmaschine in einem ersten Abgasstrang eine Turbine eines ersten Abgasturboladers aufweist und stromab einer Zusammenführung des ersten und des zweiten Abgasstranges eine Turbine eines weiteren Abgasturboladers. Damit sind auch hier die beiden Turbinen in Serie geschalten.

Die DE 699 04 928 T2 beschreibt eine turboaufgeladene Brennkraftmaschine. Auch bei dieser Brennkraftmaschine ist eine Hochdruckstufe und eine Niederdruckstufe, die der Hochdruckstufe nachgeschaltet angeordnet ist, vorgesehen.

Gemäß der JP 2000356136 ist eine Anordnung beschrieben, die Aufladungskapazität nach dem Ausgang eines Motors einfach sicherstellt und die Effizienz der Aufladung vor allem in einem Bereich geringer Drehzahl verbessert. Es sind eine Niederdruck-Turboladerstufe und ein Hochdruck- Turboladerstufe vorgesehen und so gesteuert, dass diese abwechselnd in einem niedrigen Drehzahlbereich, einem mittleren Drehzahlbereich und einem hohen Drehzahlbereich betrieben werden. Die zweistufige Aufladung sieht in der Niederdruckstufe einen Niederdruck-Turbolader großer Kapazität und einen Niederdruck-Turbolader geringer Kapazität und in der Hochdruckstufe ein Hochdruck-Turbolader vor. Das Öffnen und Schließen der Ventile erfolgt durch eine Steuereinheit in Abhängigkeit vom Ausgangssignal einer Motordrehzahl-Erfassungseinrichtung derart, dass der Hochdruck-Turbolader und der Niederdruck-Turbolader geringer Kapazität verwendet werden, wenn die Motordrehzahl kleiner als eine Drehzahl N1 ist und der Hochdruck-Turbolader und der Niederdruck-Turbolader großer Kapazität verwendet werden, wenn die Motordrehzahl größer oder gleich der Drehzahl N1 und kleiner als die Drehzahl N2 ist. Ist die Motordrehzahl gleich der Drehzahl N2 oder größer, sind alle Turbolader eingesetzt.

Die in der DE 25 44 471 beschriebene Anordnung dient dazu, den Aufladegrad einer Brennkraftmaschine zu erhöhen und die Anpassung der Abgasturbolader an das gewünschte Betriebskennfeld der Brennkraftmaschine mit einfachen Mitteln zu verbessern. Dies wird dadurch bewerkstelligt, dass die Niederdruckstufe für den vollen Luftgewichtsdurchsatz bei hoher Drehzahl der Brennkraftmaschine und die Hochdruckstufe für einen dem gewünschten Drehmomentverlauf entsprechenden Luftgewichtsdurchsatz bei niedriger Drehzahl der Brennkraftmaschine ausgelegt ist und die Hochdruckstufe oberhalb einer vorgebbaren Drehzahl oder einem vorgebbaren Druck abgasseitig teilweise und regelbar umgehbar ist. Durch die entsprechende Auslegung erreicht man, dass die Hochdruckstufe im unteren und mittleren Drehzahlbereich bereits einen ausreichenden Ladedruck liefert, wobei beim Start und Hochfahren der Maschine die Niederdruckstufe in bekannter Weise zunächst umgangen werden kann. Bei höheren Drehzahlen wird die Hochdruckstufe abgasseitig umgangen, so dass ihr Druckverhältnis immer mehr abfällt, bis sie schließlich bei Erreichen der Nenndrehzahl der Brennkraftmaschine den Ladedruck nur noch geringfügig oder gar nicht erhöht. Bei Nenndrehzahl der Brennkraftmaschine arbeitet die Niederdruckstufe des Abgasturboladers in ihrem Auslegungspunkt und erzeugt das gewünschte Druckverhältnis.

Eine andere Möglichkeit der Regelung besteht nach der DE 25 44 471 darin, dass für jede Verdichterstufe mehrere parallel geschaltete Abgasturbolader angeordnet sind, die einzeln in Abhängigkeit maßgeblicher Kenngrößen, z. B. Ladeluftdruck, Drehzahl und Last der Brennkraftmaschine, zu- und abschaltbar sind. Im Bereich des maximalen Drehmoments bei mittleren Drehzahlen ist dann beispielsweise in der Niederdruckstufe ein Turbolader abzuschalten. Im Bereich zwischen dem Zu- und Abschalten von Turboladern kann zweckmäßig eine Bypaß-Regelung wirksam werden. Durch die Verwendung mehrerer kleiner Turbolader ist ein schnelleres Anfahren der Brennkraftmaschine möglich, da die kleineren Turbolader geringere Trägheitsmomente haben. Ferner wird durch diese Gestaltung erreicht, dass die Spitzendrücke im gesamten Volllastbereich niedrig gehalten werden und geringe Abgasgegendrücke im Teillastbereich herrschen.

Der vorliegenden Erfindung liegt die Aufgabe zugrunde, einerseits ausreichend hohe Abgasrückführungsraten zur Verfügung zu stellen und andererseits jedoch mit einer vereinfachten Turbinenanordnung auszukommen. Weiterhin sollen bevorzugt die Nachteile des Umblasens oder Abblasens in größeren Betriebsbereichen des Motors vermieden werden.

Dies wird erfindungsgemäß durch eine Brennkraftmaschine nach Anspruch 1 und ein Verfahren zum Betreiben einer Brennkraftmaschine nach Anspruch 4 erreicht. Vorteilhafte Ausführungsformen und Weiterbildungen sind Gegenstand der Unteransprüche.

Eine erfindungsgemäße Brennkraftmaschine weist eine Abführleitung für Abgase auf, sowie eine Abgasrückführungsleitung, welche mit der Abführleitung in Strömungsverbindung steht und welche wenigstens einen Teil der Abgase bzw. Rückgase in eine Luftverteilerleitung führt, wobei diese Luftverteilerleitung den Arbeitselementen der Brennkraftmaschine Luft und insbesondere Frischluft zuführt. Weiterhin sind eine erste Abgasturboladeeinrichtung und eine zweite Abgasturboladeeinrichtung vorgesehen, wobei die erste Abgasturboladeeinrichtung und die zweite Abgasturboladeeinrichtung bezüglich einer Zuführleitung für Ladeluft in Serie angeordnet sind.

Erfindungsgemäß weist die Brennkraftmaschine eine dritte Abgasturboladeeinrichtung auf, welche parallel zu der zweiten Abgasturboladeeinrichtung und bezüglich der Zufuhrleitung für Ladeluft in Serie zu der ersten Abgasturboladeeinrichtung angeordnet ist, wobei die zweite Abgasturboladeeinrichtung und die dritte Abgasturboladeeinrichtung unabhängig voneinander zu- und abschaltbar sind.

Unter einer Strömungsverbindung wird hierbei verstanden, dass in die Abführleitung gelangende Abgase wenigstens teilweise über diese Abgasrückführungsleitung wieder in die Luftverteilerleitung geführt und damit erneut dem Motor bzw. den Zylindern zugeführt werden können.

Im Gegensatz zu den aus dem Stand der Technik bekannten Konzepten sind damit bei dem erfindungsgemäßen Konzept mindestens drei Abgasturboladeeinrichtungen vorgesehen, wobei zwei dieser Abgasturboladeeinrichtungen parallel geschaltet sind und die Dritte zu den beiden Erstgenannten in Serie angeordnet ist.

Damit wird eine Anordnung einer Hochdruck (HD) Registerstufe mit gemeinsamer nachgeschalteter Niederdruckstufe (2 HDT/1NDT) vorgeschlagen. Dabei wird vorzugsweise - anders als heute üblich - diese Hochdruckstufe, das heißt, die zweite bzw. dritte Abgasturboladeeinrichtung bei steigendem Abgasvolumen nicht umblasen, sondern es ist möglich, eine Abgasturboladeeinrichtung hinzuzuschalten, um auf diese Weise den effektiven Abgasquerschnitt der HD-Stufe zu vergrößern. Die Bezeichnungen HDT bzw. NDT stehen dabei für Hochdruck- bzw. Niederdruckturboladeeinrichtung.

Die zweite Abgasturboladeeinrichtung und die dritte Abgasturboladeeinrichtung weisen unterschiedliche Größen auf. Dies bedeutet, dass die Strömungsquerschnitte der durch sie hindurchtretenden Abgase unterschiedlich sind. Damit sind auch die von den zweiten und dritten Abgasturboladeeinrichtungen zu erreichenden Verdichtungen unterschiedlich. Wenn man daher die beiden Turboladeeinrichtungen unterschiedlich groß wählt, so ermöglicht dies eine nochmals feinere Abstimmung auf den Abgasvolumenstrom. So ist es möglich, dass anfangs nur die kleinere Abgasturboladeeinrichtung durchströmt wird, mit steigendem Abgasvolumenstrom nur die größere Abgasturboladeeinrichtung und schließlich bei sehr hohen Drehzahlen und Lasten beide, d.h. die zweite und dritte Abgasturboladeeinrichtung durchströmt werden.

Es wird darauf hingewiesen, dass auch eine abgeschaltete Abgasturboladeeinrichtung vorzugsweise zumindest mit geringen Abgasmengen durchströmt wird, um eine zumindest geringfügige Bewegung der Turbine aufrecht zu erhalten. Dies wird jedoch gleichwohl als abgeschaltete Turbine aufgefasst. Wird eine Turboeinrichtung nicht beaufschlagt, verhindern bevorzugt Rückschlagventile in den Ladeluftleitungen eine rückströmende verdichtende Ladeluft durch den jeweils abgeschalteten Verdichter. Damit ist zwischen der Abgasrückführungsleitung und den zweiten und dritten Abgasturboladeeinrichtungen jeweils eine Ventileinrichtung angeordnet, um die Zuführung von Abgasen in die Abgasturboladeeinrichtungen zu steuern. Mit Hilfe dieser Ventileinrichtungen, bei denen es sich beispielsweise um Sperrklappen handeln kann, können die zweite oder dritte Turboladeeinrichtung ab- bzw. zugeschaltet werden.

In die Brennkraftmaschine weist eine Steuereinrichtung auf, welche die Zufuhr von Abgasen an die zweite und dritte Abgasturboladeeinrichtung in Abhängigkeit von Betriebseigenschaften der Brennkraftmaschine im Arbeitsbetrieb steuert. Bei diesen Eigenschaften kann es sich dabei insbesondere um eine Drehzahl bzw. ein Drehmoment des Motors handeln.

In der Abgasrückführungsleitung ist eine Ventileinrichtung vorgesehen, mittels derer die Zufuhr von Abgas in die Luftverteilerleitung steuerbar ist. Bei dieser Ventileinrichtung handelt es sich bevorzugt um eine Sperrklappe mit der auch eine feinere Regulierung des Abgases bzw. des Abgasstroms möglich ist.

Insbesondere, wenn man ohne zusätzliche Sensorik wie beispielsweise Luftmassenmesser oder Abgasgegendrucksensoren auskommen möchte, kann man zur Näherung, d.h. bei stationärer Betrachtung des Falles, die oben erwähnten (bevorzugt druckluftbetätigten) Drosselklappenventile für das Zu-, Ab- oder Umschalten der Abgasturboladeeinrichtungen von der für das Einspritzsystem notwendigen EDC zunächst nur in Abhängigkeit von der Drehzahl oder dem Drehmoment, d.h. kennfeldabhängig, steuern.

Damit genügen in diesem Falle zwei Kennfelder, d.h. ein Kennfeld für jede Turboladeeinrichtung, welche in Abhängigkeit von Drehzahl und Drehmoment oder ggf. der Einspritzmenge regulieren. Vorzugsweise werden hierbei die Schaltpunkte der beiden Ventileinrichtungen so definiert, dass sich in jedem Betriebszustand des Motors ein passender Turbinenquerschnitt ergibt, mit dem man die notwendigen Abgasrückführungsraten und Lamda-Werte erreichen kann.

Bevorzugt ist die Steuereinrichtung derart gestaltet, dass sie die Zufuhr von Abgasen in die zweite und dritte Abgasturboladeeinrichtung in Abhängigkeit von der Zufuhr von Abgas in Luftverteileinrichtung steuert. Insbesondere im instationären Motorbetrieb wird so bevorzugt die Abgasrückführungsregelung in das Ansteuerkonzept mit eingebunden, da zum Beispiel durch das Schließen der Abgasrückführung während der Beschleunigung, um einen Rußstoß zu vermeiden, gegenüber dem Stationärfall ein deutlich erhöhter Abgasmassenstrom durch die Turbinen fließen muss.

Dementsprechend wird bevorzugt die Querschnittsfläche der Turbinen vergrößert. Weiterhin wäre es denkbar, dass man einen stationären Ansteuerwert der oben erwähnten Steuerventile, der sich zunächst nur aus Drehzahl und Drehmoment definiert, mit einem dynamischen Faktor versieht, der sich aus dem augenblicklichen Betriebszustand (bei dem es sich um einen Stationärbetrieb oder einen dynamischen Betrieb handeln kann) und der Stellung der Abgasrückführungsregelklappe sowie dem Betriebspunkt, der sich aus Drehzahl und Drehmoment des Motors ergibt, korrigiert. Dabei ist es möglich, dass die Stellung der Regelklappe in mehrere Zustände wie offen, halb offen oder geschlossen, eingeteilt wird, es wäre jedoch auch eine feinere Unterteilung hinsichtlich der Stellung der Regelklappe möglich. Auch im Kaltlauf, Motorbremsbetrieb und Notbetrieb ist es möglich, in der beschriebenen Weise vorzugehen, da in diesen Betriebsarten die Abgasrückführung meist abgeschaltet wird.

Falls der Motor einen Luftmassenmesser aufweist, kann dessen Messwert für die Positionierung der Drosselklappenventile als Regelgröße dienen. Ein Frischluftmassensollwert in Form einer Führungsgröße wird in einem für einen stationären Zustand charakteristischem Sollkennfeld abgelegt und durch Ansteuerung der Drosselklappen eingeregelt. Zusätzlich wird bevorzugt in einem weiteren Kennfeld für Drehzahl bzw. Drehmoment (bei dem es sich um ein Betriebsartenkennfeld der Turboladeransteuerung handelt) festgelegt, welches der beiden Ventile für die Regelung des Frischluftmassenstroms augenblicklich verwendet werden soll.

Vorzugsweise kommt für einen dynamischen Betrieb ein weiteres Sollkennfeld zum Einsatz. Falls sich der Abgasrückführungssteller während einer Beschleunigung schließt, so steigt entsprechend die Energiebilanz am Turbolader der Frischluftmassenstrom an und umgekehrt sinkt der Frischluftmassenstrom, wenn das Abgasrückführungsventil sich öffnet und Abgas der Turbine entzogen wird. Dabei ist es möglich, eine Dynamikerkennung vorzusehen, welche bestimmt, nach welchem Sollkennfeld (dh. stationär oder dynamisch) geregelt wird, wobei diese Dynamikerkennung vorzugsweise über dem Gradienten der Drehzahl- und Drehmomentänderung erfolgt.

Damit wird bei dieser bevorzugten Ausführungsform eine Berücksichtigung von Gradienten der Drehzahl bzw. Drehmomentänderungen berücksichtigt. Es wäre auch denkbar, die Regelung mit dem Abgasgegendruck vor den Hochdruckturbinen durchzuführen, anstatt die Frischluftmasse als Regelgröße vorzusehen, da sich auch dieser Abgasgegendruck direkt proportional zu dem Frischluftmassenstrom verhält.

In einer weiteren bevorzugten Ausführungsform weist die Brennkraftmaschine wenigstens eine weitere Abgasturboladeeinrichtung auf. Das Vorsehen einer weiteren Abgasturboeinrichtung erlaubt eine weitere Unterteilung bzw. feinere Abstufung der Hochdruck- und Niederdruckstufe. So wäre es möglich, drei Hochdruckturboladeeinrichtungen und eine Niederturboladeeinrichtung oder auch zwei Hochdruckturboladeeinrichtung und zwei Niederdruckturboladeeinrichtung vorzusehen, wobei bevorzugt in letzterem Fall beide Niederdruckturboladeeinrichtungen in beliebiger Weise in Serie zu beiden Höchdruckturboladeeinrichtungen schaltbar sind. Auch hier wäre es möglich, die beiden Niederdruckturboladeeinrichtungen in unterschiedlicher Größe zu dimensionieren.

Die vorliegende Erfindung ist weiterhin auf Kraftfahrzeug mit einer Brennkraftmaschine der oben beschriebenen Art gerichtet. Insbesondere handelt es sich bei dem Kraftfahrzeug um ein Nutzfahrzeug.

Die vorliegende Erfindung ist weiterhin auf ein Verfahren zum Betreiben einer Brennkraftmaschine gerichtet, wobei Abgase der Brennkraftmaschine in eine Abführleitung abgeführt werden und wenigstens teilweise mit einer Abgasrückführungsleitung, welche mit der Abführleitung in Strömungsverbindung steht, in eine Luftverteilerleitung geführt werden, wobei diese Luftverteilerleitung den Arbeitselementen der Brennkraftmaschine (Frisch)luft zuführt und wobei Abgase über eine zweite Abgasturboladeeinrichtung und eine erste Abgasturboladeeinrichtung geleitet werden, wobei die erste Abgasturboladeeinrichtung und die zweite Abgasturboladeeinrichtung bezüglich einer Zuführleitung für Ladeluft in Serie angeordnet sind.

Erfindungsgemäß werden die Abgase wenigstens zeitweise über eine dritte Abgasturboeinrichtung geleitet, wobei die dritte Abgasturboladeeinrichtung parallel zu der zweiten Abgasturboladeeinrichtung und bezüglich der Zuführleitung für Ladeluft in Serie zu der ersten Abgasturboladeeinrichtung angeordnet ist, und wobei die zweite Abgasturboladeeinrichtung und die dritte Abgasturboladeeinrichtung unabhängig voneinander zu- und abgeschaltet werden.

Bei der ersten Abgasturboladeeinrichtung handelt es sich um die oben bereits mehrmals erwähnte Niedrigdruckabgasturboladeeinrichtung und bei den zweiten und dritten Abgasturboladeeinrichtungen um die oben erwähnten Hochdruckabgasturboladeeinrichtungen. Damit wird auch durch das erfindungsgemäße Verfahren eine höhere Variantenvielfalt der Steuerung der Brennkraftmaschine zur Verfügung gestellt. Daneben wird durch das erfindungsgemäße Verfahren auch ein verbessertes Beschleunigungsverhalten ermöglicht.

Mittels Ventileinrichtungen wird wenigstens zeitweise der zu den zweiten und dritten Abgasturboladeeinrichtungen gelangende Abgasstrom verändert. Dabei ist es möglich, den jeweiligen Abgasstrom vollständig zu unterbinden oder auf ein Minimum zu reduzieren, so dass eine geringfügige Bewegung der Abgasturboladeeinrichtungen aufrecht erhalten bleibt, ohne jedoch eine Verdichtungswirkung zu erzielen.

Die Zufuhr von Abgasen an die zweite und dritte Abgasturboladeeinrichtung wird in Abhängigkeit von Betriebseigenschaften der Brennkraftmaschine im Arbeitsbetrieb gesteuert, wie oben erwähnt, insbesondere der Drehzahl und dem Drehmoment.

In einem ersten Betriebszustand wird nur die erste und die zweite Abgasturboladeeinrichtung von Abgasen durchströmt bzw. betrieben (um Ladeluft zu verdichten) und in einem zweiten Betriebszustand nur die erste und die dritte Abgasturboladeeinrichtung von Abgasen durchströmt und in einem dritten Betriebszustand die erste, die zweite und die dritte Abgasturboladeeinrichtung von Abgasen durchströmt. Damit werden hier drei Betriebszustände zur Verfügung gestellt, die beim Betrieb des Kraftfahrzeuges variiert werden können.

Vorzugsweise folgt der zweite Betriebszustand auf den ersten Betriebszustand und der dritte Betriebszustand auf den zweiten Betriebszustand. Dies bedeutet, dass die drei erwähnten Betriebszustände der Reihe nach durchfahren werden.

Während eines Übergangs zwischen zwei Betriebszuständen wird wenigstens zeitweise die Abgaszufuhr in die Luftverteilereinrichtung reduziert. Für den Fahrkomfort ist es vorteilhaft, wenn der Fahrer die jeweiligen Schaltpunkte zwischen den Betriebszuständen im Fahrbetrieb nicht merkt. Grundsätzlich besteht bei einer Registeraufladung mit den oben erwähnten Festgeometrieturboladern (welche bevorzugt verwendet werden) das Problem, dass sich während der Schaltvorgänge aufgrund der sprunghaften Turbinenquerschnittsänderungen auch relativ große Sprünge im Ladedruck ergeben.

Auf diese Weise werden eine Vielzahl von Betriebsparametern, wie beispielsweise das verfügbare Drehmoment, der spezifische Verbrauch oder auch die Schwarzrauchimmission, beeinflusst. Darüber hinaus merkt jedoch der Fahrer auch einen unsteten Drehmomentverlauf während der Beschleunigung. Um dies zu verhindern, wird während einer Umschaltung zwischen zwei Betriebszuständen durch ein Hinzuschalten einer jeweils weiteren Abgasturboladeeinrichtung auf das Abgasrückführungssystem zurückgegriffen. Falls man bevorzugt die Abgasrückführung während eines Bereichswechsels drosselt, steht mehr Abgasenergie während der Schaltphasen zur Verfügung, und auf die Weise kann ein drastischer Ladedruckeinbruch vermieden werden.

Wie oben erwähnt, ist es hilfreich, wenn die jeweils abgeschaltete Turbine mit einem kleinen Abgasmassenteilstrom ventiliert. Auf diese Weise kann vermieden werden, dass die jeweils abgeschaltete Turbine vom Stillstand aus beschleunigt wird. Falls jedoch ein stationärer Betrieb erkannt wird, kann die entsprechende Turboladeeinrichtung auch vollständig abgeschaltet werden.
- Fig. 1: Eine schematische Darstellung einer erfindungsgemäßen Brenn-Kraftmaschine;
- Fig. 2: die Brennkraftmaschine aus Fig. 1 in einem ersten Betriebszustand;
- Fig. 3: die Brennkraftmaschine aus Fig. 1 in einem zweiten Betriebszustand;
- Fig. 4: eine Darstellung einer Beziehung zwischen Drehzahl und Drehmoment bei unterschiedlichen Bereichen bzw. Betriebszuständen; und
- Fig. 5: eine Darstellung zur Veranschaulichung einer Abgasrückführungskorrektur.

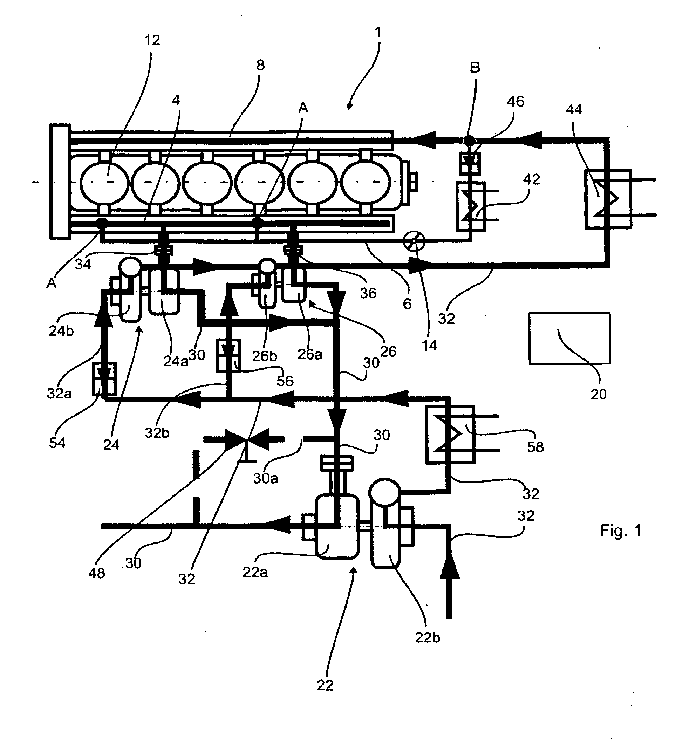

Fig. 1 zeigt schematisch eine erfindungsgemäße Brennkraftmaschine 1. Dabei ist eine Vielzahl von Arbeitselementen 12 vorgesehen, das heißt insbesondere Zylinder mit Kolben, welche über eine Abführleitung 4 Abgase abgeben. Die Punkte A beziehen sich dabei auf Abgasentnahmestellen, von denen aus das Abgas in eine Abgasrückführungsleitung 6 gelangt. Das Bezugszeichen 14 bezieht sich auf ein Ventil, welches in dieser Abgasrückführungsleitung angeordnet ist, um die Rückfuhr von Abgas an die Arbeitselemente 12 zu unterbinden. Das Bezugszeichen 42 bezieht sich auf einen Abgasrückführungskühler. An einer Abgaszuführung B wird das Abgas der Ladeluft, welche entlang einer Leitung bzw. eines Strömungsweges 32 fließt, zugeführt. Ein Rückschlagventil 46 verhindert dabei, dass Luft oder Abgase bei entsprechenden Druckverhältnissen wieder zurück in die Abgasrückführungsleitung 6 gelangen können.

Über eine Luftverteilerleitung 8 wird die Luft, welche auch Abgasbestandteile enthält, wieder den Arbeitselementen 12 der Brennkraftmaschine 1 zugeführt. Die Luft selbst wird dabei entlang einer Zuführleitung 32 geführt, und gelangt zunächst durch eine in ihrer Gesamtheit mit 22 bezeichnete erste Abgasturboladeeinrichtung. Diese Abgasturboladeeinrichtung weist hierbei eine Turbine 22a auf sowie einen hiermit gekoppelten Verdichter 22b zum Verdichten der Ladeluft.

An diese erste Abgasturboladeeinrichtung 22 schließt sich entlang der Zuführleitung 32 zunächst ein erster Ladeluftkühler 58 an, und ausgehend von diesem Ladeluftkühler 58 verzweigt die Zuführleitung 32 in zwei Zweige 32a und 32b. Der Zweig 32a führt dabei zu einer zweiten Abgasturboladeeinrichtung 24, die sich wiederum aus einer Turbine 24a und einem Verdichter 24b zusammensetzt. Der Zweig 32b führt entsprechend zu einer zweiten Abgasturboladeeinrichtung 26, welche ebenfalls eine Turbine 26a und einen Verdichter 26b aufweist.

Anschließend gelangt die derart verdichtete Ladeluft über die Zuführleitung 32 zu einem Ladeluftkühler 44.

Bezugszeichen 34 und 36 beziehen sich auf Ventileinrichtungen bzw. Sperrklappen zum separaten Zu- und Abschalten der beiden Abgasturboladeeinrichtungen 24 und 26. Die Bezugszeichen 54 und 56 kennzeichnen Rückschlagventile, welche jeweils verhindern, dass Ladeluft von den zweiten bzw. dritten Abgasturboladeeinrichtungen in Richtung der ersten Abgasturboladeeinrichtung gelangt. Auf diese Weise ist es möglich, wie oben erwähnt, die Ladeluft in der gewünschten Art und Weise zu verdichten. Eine Steuerungseinrichtung 20 steuert die beiden Ventileinrichtungen 34 und 36 insbesondere in Abhängigkeit von einer Drehzahl bzw. einem Drehmoment des Verbrennungsmotors 1.

Das Bezugszeichen 30 bezieht sich auf eine Führungsleitung für die Abgase, wobei diese Führungsleitung insbesondere durch die Turbinen 24a, 26a und 22a der jeweiligen Abgasturboladeeinrichtungen 24, 26 und 22 tritt. Bei einer Sperrung dieser Abgasleitung durch die beiden Ventile 34 und 36 tritt entsprechend keine Verdichtung der Ladeluft auf, selbst, wenn eine geringe Menge an Abgas durch die jeweilige Turbine strömt.

Das Bezugszeichen 30a bezieht sich auf eine Abzweigung aus der Leitung 30, in der ein weiteres Ventil 48 in Form eines Niederdruckbypassventils angeordnet ist. Durch Öffnen dieses Ventils kann auch die Turbine 22a umgangen werden.

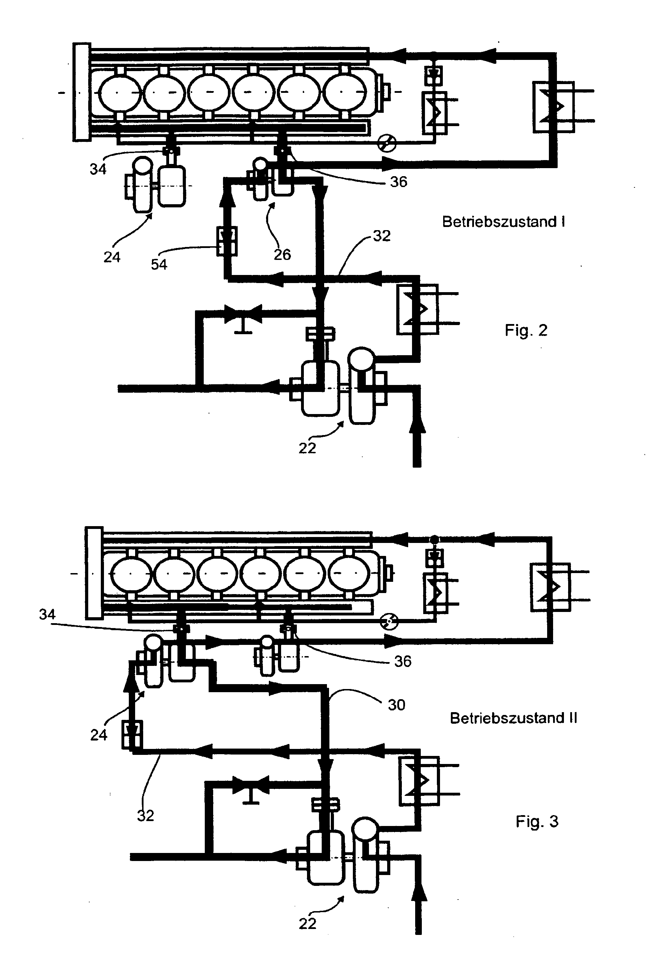

Fig. 2 zeigt die Anordnung aus Fig. 1, wobei hier lediglich die dritte Turboladeeinrichtung 26 und die erste Turboladeeinrichtung 22 zugeschaltet sind. Dies bedeutet, dass die Ventileinrichtung 34 die Zufuhr von Abgasen in die zweite Turboladeeinrichtung 24 zumindest weitgehend sperrt. In den Figuren 1 bis 3 gezeigten Ausführungsformen ist jeweils die dritte Turboladeeinrichtung 26 kleiner dimensioniert als die zweite Turboladeeinrichtung 24. Damit ist dieser Betriebszustand I insbesondere für eine niedrige Drehzahl bzw. eine niedrige Last geeignet.

Fig. 3 zeigt einen weiteren Betriebszustand II, bei dem die erste und die zweite Turboladeeinrichtung aktiviert sind. Die dritte Turboladeeinrichtung 26 ist in diesem Betriebszustand mit Hilfe des entsprechenden Ventils 36 abgeschaltet. Dieser Betriebszustand II eignet sich dabei insbesondere für Bereiche mit mittlerer Last und mit mittlerer Drehzahl. Bei dem in Fig. 1 gezeigten Betriebszustand III sind beide Abgasturboladeeinrichtungen 24 und 26 zugeschaltet, so dass sich dieser Zustand insbesondere für hohe Drehzahl bzw. hohe Last eignet.

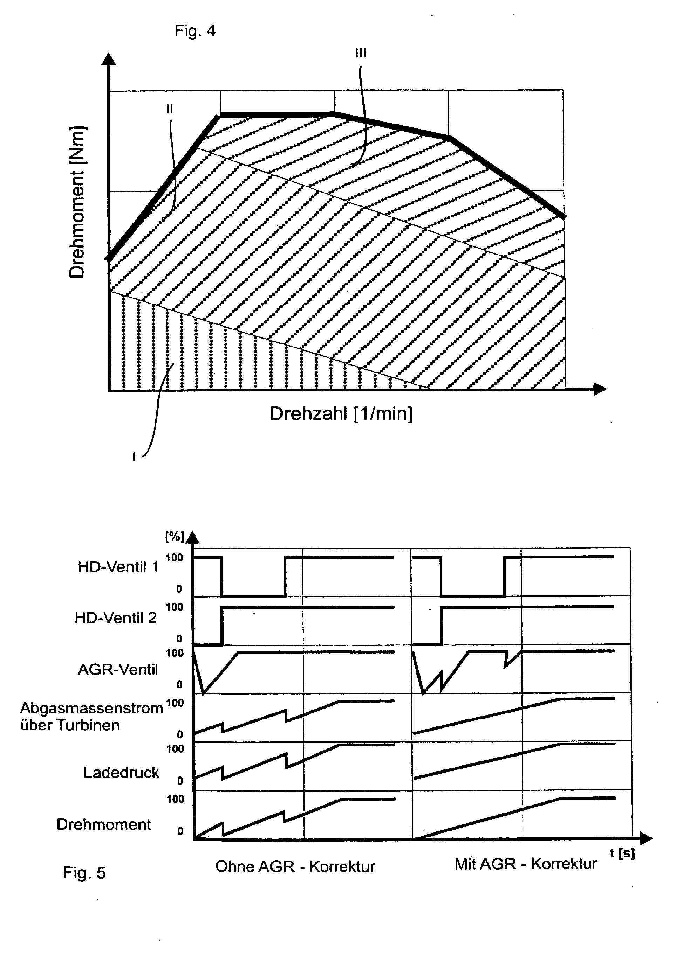

Fig. 4 zeigt eine weitere Darstellung der Betriebszustände I bis III, nachdem entweder nur die dritte Turboladeeinrichtung zugeschaltet ist (Zustand I) oder nur die zweite Turboladeeinrichtung (Zustand II) oder beide Turboladeeinrichtungen (Zustand III). Man erkennt, dass das Arbeitsfeld, wenn alle Turboladeeinrichtungen aktiviert sind, bei jeweils höheren Drehzahlen bzw. Drehmomenten angesiedelt ist.

Fig. 5 veranschaulicht die Auswirkungen einer oben erwähnten Abgasrückführungskorrektur, d.h der teilweisen Abschaltung der Abgasrückführung beim Wechseln des Betriebszustands. Dabei zeigt das linke Teilbild den Fall, in dem keine Abgasrückführungskorrektur vorgenommen wird, und das rechte Teilbild den Fall, in dem eine Abgasrückführungskorrektur vorgenommen wird. Falls keine Abgasrückführungskorrektur durchgeführt wird, wird das Abgasrückführungsventil, wie in Fig. 5 veranschaulicht, nur kurz zu Beginn eines Drehmomentsprunges geschlossen, um einen Rußstoß zu vermeiden. Falls eine Abgasrückführungskorrektur verwendet wird, wird das Abgasrückführungsventil 14 in Fig. 1 zusätzlich zweimal angesteuert, genauer gesagt, leicht bzw. teilweise geschlossen, damit die spezifische Abgasmasse bezogen auf den Turbinenquerschnitt nicht abfällt. In diesem Falle ergeben sich ein gleichmäßigerer Verlauf des Ladedrucks und auch des Abgasmassenstroms über den Turbinen.

Sämtliche in den Anmeldungsunterlagen offenbarte Merkmale werden als erfindungswesentlich beansprucht, sofern sie einzeln oder in Kombination gegenüber dem Stand der Technik neu sind.

## Patentansprüche

1. Brennkraftmaschine (1) mit einer Abführleitung (4) für Abgase, mit einer Abgasrückführungsleitung (6), welche mit der Abführleitung (4) in Strömungsverbindung steht und welche wenigstens einen Teil des Abgases in eine Luftverteilerleitung (8) führt, wobei diese Luftverteilerleitung (8) den Arbeitselementen (12) der Brennkraftmaschine (1) Luft zuführt, mit einer ersten Abgasturboladeeinrichtung (22) und einer zweiten Abgasturboladeeinrichtung (24), wobei
- die erste Abgasturboladeeinrichtung (22) und die zweite Abgasturboladeeinrichtung (26) bezüglich einer Zuführleitung (32) für Ladeluft in Serie angeordnet sind,
- die Brennkraftmaschine (1) eine dritte Abgasturboladeeinrichtung (26) aufweist, welche parallel zu der zweiten Abgasturboladeeinrichtung (24) und bezüglich der Zuführleitung (32) für Ladeluft in Serie zu der ersten Abgasturboladeeinrichtung (22) angeordnet ist,
- die zweite Abgasturboladeeinrichtung (24) und die dritte Abgasturboladeeinrichtung (26) unabhängig voneinander zu- und abschaltbar sind,
- zwischen der Abgasrückführungsleitung (6) und den zweiten und dritten Abgasturboladeeinrichtungen (24, 26) jeweils eine Ventileinrichtung (34, 36) angeordnet ist, um die Zuführung von Abgas in die Abgasturboladeeinrichtungen (24, 26) zu steuern,
- die Brennkraftmaschine (1) eine Steuereinrichtung (20) aufweist, welche die Zufuhr von Abgasen an die zweite und dritte Abgasturboladeeinrichtung (24, 26) in Abhängigkeit von Betriebseigenschaften der Brennkraftmaschine (1) im Arbeitsbetrieb steuert,
- in der Abgasrückführungsleitung (6) eine Ventileinrichtung (14) vorgesehen ist, mittels derer die Zufuhr von Abgas in die Luftverteilerleitung (8) steuerbar ist,
- die Steuereinrichtung (20) derart gestaltet ist, dass sie die Zufuhr von Abgasen in die zweite und dritte Abgasturboladeeinrichtung (24, 26) in Abhängigkeit von der Zufuhr von Abgas in die Luftverteilleitung steuert **dadurch gekennzeichnet, dass**
- die zweite Abgasturboladeeinrichtung (24) und die dritte Abgasturboladeeinrichtungen (26) unterschiedliche Größen aufweisen wobei
- die Abgasrückführleitung (6) stromauf der zwei parallel angeordneten, zweiten und dritten Abgasturboladeeinrichtung (24, 26) abzweigt und stromab der zwei parallel angeordneten zweiten und dritten Abgasturboladeeinrichtungen (24, 26) einmündet.

2. Brennkraftmaschine (1) nach Anspruch 1, **dadurch gekennzeichnet, dass** die Brennkraftmaschine (1) wenigstens eine weitere Abgasturboladeeinrichtung aufweist.

3. Verfahren zum Betreiben einer Brennkraftmaschine (1), wobei Abgase der Brennkraftmaschine (1) mit einer Abführleitung (4) abgeführt werden und wenigstens teilweise mit einer Abgasrückführungsleitung (6), welche mit der Abführleitung (4) in Strömungsverbindung steht, in eine Luftverteilerleitung (8) geführt werden, wobei diese Luftverteilerleitung (8) den Arbeitselementen (12) der Brennkraftmaschine (1) Luft zuführt, wobei Abgase über eine zweite Abgasturboladeeinrichtung (24) und eine erste Abgasturboladeeinrichtung (22) geleitet werden, wobei die erste Abgasturboladeeinrichtung (22) und die zweite Abgasturboladeeinrichtung (26) bezüglich einer Zuführleitung (32) für Ladeluft in Serie angeordnet sind, wobei Abgase wenigstens zeitweise über eine dritte Abgasturboladeeinrichtung (26) geleitet werden, wobei die dritte Abgasturboladeeinrichtung (26) parallel zu der zweiten Abgasturboladeeinrichtung (24) und bezüglich einer Zuführleitung (32) für Ladeluft in Serie zu der ersten Abgasturboladeeinrichtung (22) angeordnet ist, wobei die zweite Abgasturboladeeinrichtung (24) und die dritte Abgasturboladeeinrichtung (26) unabhängig voneinander zu- und abgeschaltet werden, wobei mittels Ventileinrichtungen (34, 36) wenigstens zeitweise der zu den zweiten und dritten Abgasturboladeeinrichtungen (24, 26) gelangende Abgasstrom verändert wird, und wobei die Zufuhr von Abgasen an die zweite und dritte Abgasturboladeeinrichtung (24, 26) in Abhängigkeit von Betriebseigenschaften der Brennkraftmaschine (1) im Arbeitsbetrieb gesteuert wird, derart, dass in einem ersten Betriebszustand (I) nur die erste (22) und die zweite (24) Abgasturboladeeinrichtung von Abgasen durchströmt werden, in einem zweiten Betriebzustand (II) nur die erste (22) und die dritte (26) Abgasturboladeeinrichtung von Abgasen durchströmt werden und in einem dritten Betriebszustand (III) die erste (22), die zweite (24) und die dritte (26) Abgasturboladeeinrichtung von Abgasen durchströmt werden,
**dadurch gekennzeichnet, dass**
während eines Übergangs zwischen zwei Betriebszuständen (I, II, III) wenigstens zeitweise die Abgaszufuhr in die Luftverteilereinrichtung (8) reduziert wird und die zweite Abgasturboladeeinrichtung (24) und die dritte Abgasturboladeeinrichtungen (26) unterschiedliche Größen aufweisen.

4. Verfahren nach Anspruch 3, **dadurch gekennzeichnet, dass** zeitlich der zweite Betriebszustand (II) auf den ersten Betriebszustand (I) und der dritte Betriebszustand (III) auf den zweiten Betriebszustand (II) folgt.

## Claims

1. An internal combustion engine (1) having a discharge line (4) for exhaust gases, having an exhaust-gas recirculation line (6) which is connected in terms of flow to the discharge line (4) and which conducts at least a part of the exhaust gas into an air distributor line (8), wherein said air distributor line (8) supplies air to the working elements (12) of the internal combustion engine (1), having a first exhaust-gas turbocharging device (22) and having a second exhaust-gas turbocharging device (24), wherein
- the first exhaust-gas turbocharging device (22) and the second exhaust-gas turbocharging device (26) are arranged in series with respect to a supply line (32) for charge air,
- the internal combustion engine (1) has a third exhaust-gas turbocharging device (26) which is arranged in parallel with the second exhaust-gas turbocharging device (24) and, with respect to the supply line (32) for charge air, in series with the first exhaust-gas turbocharging device (22),
- the second exhaust-gas turbocharging device (24) and the third exhaust-gas turbocharging device (26) are activatable and deactivatable independently of one another,
- between the exhaust-gas recirculation line (6) and the second and third exhaust-gas turbocharging devices (24, 26), there is arranged in each case one valve device (34, 36) for controlling the supply of exhaust gas into the exhaust-gas turbocharging devices (24, 26),
- the internal combustion engine (1) has a control device (20) which controls the supply of exhaust gases to the second and third exhaust-gas turbocharging devices (24, 26) in a manner dependent on operating characteristics of the internal combustion engine (1) during working operation,
- in the exhaust-gas recirculation line (6), there is provided a valve device (14) by means of which the supply of exhaust gas into the air distributor line (8) can be controlled,
- the control device (20) is configured so as to control the supply of exhaust gases into the second and third exhaust-gas turbocharging devices (24, 26) in a manner dependent on the supply of exhaust gas into the air distributor line,
**characterized in that**
- the second exhaust-gas turbocharging device (24) and the third exhaust-gas turbocharging device (26) are of different sizes, wherein
- the exhaust-gas recirculation line (6) branches off upstream of the second and third exhaust-gas turbocharging devices (24, 26), which are arranged in parallel, and opens in downstream of the second and third exhaust-gas turbocharging devices (24, 26), which are arranged in parallel.

2. The internal combustion engine (1) according to Claim 1, **characterized in that** the internal combustion engine (1) has at least one further exhaust-gas turbocharging device.

3. A method for operating an internal combustion engine (1), wherein exhaust gases of the internal combustion engine (1) are discharged by way of a discharge line (4) and are at least partially conducted by way of an exhaust-gas recirculation line (6), which is connected in terms of flow to the discharge line (4), into an air distributor line (8), wherein said air distributor line (8) supplies air to the working elements (12) of the internal combustion engine (1), wherein exhaust gases are conducted via a second exhaust-gas turbocharging device (24) and a first exhaust-gas turbocharging device (22), wherein the first exhaust-gas turbocharging device (22) and the second exhaust-gas turbocharging device (24) are arranged in series with respect to a supply line (32) for charge air, wherein exhaust gases are at least temporarily conducted via a third exhaust-gas turbocharging device (26), wherein the third exhaust-gas turbocharging device (26) is arranged in parallel with the second exhaust-gas turbocharging device (24) and, with respect to the supply line (32) for charge air, in series with the first exhaust-gas turbocharging device (22), wherein the second exhaust-gas turbocharging device (24) and the third exhaust-gas turbocharging device (26) are activatable and deactivatable independently of one another, wherein, by means of valve devices (34, 36), the exhaust-gas flow passing to the second and third exhaust-gas turbocharging devices (24, 26) is at least temporarily varied, and wherein the supply of exhaust gases to the second and third exhaust-gas turbocharging devices (24, 26) is controlled in a manner dependent on operating characteristics of the internal combustion engine (1) such that, in a first operating state (I), only the first (22) and the second (24) exhaust-gas turbocharging devices are flowed through by exhaust gases, in a second operating state (II) only the first (22) and the third (26) exhaust-gas turbocharging devices are flowed through by exhaust gases, and in a third operating state (III), the first (22), the second (24) and the third (26) exhaust-gas turbocharging devices are flowed through by exhaust gases,
**characterized in that**
during a transition between two operating states (I, II, III), the supply of exhaust gas into the air distributor device (8) is at least temporarily reduced, and the second exhaust-gas turbocharging device (24) and the third exhaust-gas turbocharging device (26) are of different sizes.

4. The method according to Claim 3, **characterized in that** the second operating state (II) temporally follows the first operating state (I) and the third operating state (III) temporally follows the second operating state (II).

## Revendications

1. Moteur à combustion interne (1) avec une conduite d'évacuation (4) pour les gaz d'échappement, comprenant une conduite de recirculation de gaz d'échappement (6) qui est en liaison fluidique avec la conduite d'évacuation (4), et qui guide au moins une partie du gaz d'échappement dans une conduite de distribution d'air (8), cette conduite de distribution d'air (8) acheminant de l'air aux éléments de travail (12) du moteur à combustion interne (1), comprenant un premier dispositif de turbosoufflante à gaz d'échappement (22) et un deuxième dispositif de turbosoufflante à gaz d'échappement (24),
- le premier dispositif de turbosoufflante à gaz d'échappement (22) et le deuxième dispositif de turbosoufflante à gaz d'échappement (26) étant disposés en série par rapport à une conduite d'alimentation (32) en air de suralimentation,
- le moteur à combustion interne (1) présentant un troisième dispositif de turbosoufflante à gaz d'échappement (26) qui est disposé parallèlement au deuxième dispositif de turbosoufflante à gaz d'échappement (24) et, par rapport à la conduite d'alimentation (32) en air de suralimentation, en série par rapport au premier dispositif de turbosoufflante à gaz d'échappement (22),
- le deuxième dispositif de turbosoufflante à gaz d'échappement (24) et le troisième dispositif de turbosoufflante à gaz d'échappement (26) pouvant être connectés l'un à l'autre et déconnectés l'un de l'autre indépendamment,
- entre la conduite de recirculation de gaz d'échappement (6) et le deuxième et le troisième dispositif de turbosoufflante à gaz d'échappement (24, 26) étant disposé à chaque fois un dispositif de soupape (34, 36) pour commander l'alimentation en gaz d'échappement dans les dispositifs de turbosoufflante à gaz d'échappement (24, 26),
- le moteur à combustion interne (1) présentant un dispositif de commande (20) qui commande l'alimentation en gaz d'échappement au deuxième et au troisième dispositif de turbosoufflante à gaz d'échappement (24, 26) en fonction de propriétés de fonctionnement du moteur à combustion interne (1) en mode de travail,
- dans la conduite de recirculation de gaz d'échappement (6) étant prévu un dispositif de soupape (14) au moyen duquel l'alimentation en gaz d'échappement dans la conduite de distribution d'air (8) peut être commandée,
- le dispositif de commande (20) étant configuré de telle sorte qu'il commande l'alimentation en gaz d'échappement dans le deuxième et le troisième dispositif de turbosoufflante à gaz d'échappement (24, 26) en fonction de l'alimentation en gaz d'échappement dans la conduite de distribution d'air,
**caractérisé en ce que**
- le deuxième dispositif de turbosoufflante à gaz d'échappement (24) et le troisième dispositif de turbosoufflante à gaz d'échappement (26) présentent des dimensions différentes,
- la conduite de recirculation de gaz d'échappement (6) se ramifiant en amont des deux, le deuxième et le troisième, dispositifs de turbosoufflante à gaz d'échappement (24, 26) disposés parallèlement, et débouchant en aval des deux, le deuxième le troisième, dispositifs de turbosoufflante à gaz d'échappement (24, 26) disposés parallèlement.

2. Moteur à combustion interne (1) selon la revendication 1, **caractérisé en ce que** le moteur à combustion interne (1) présente au moins un dispositif de turbosoufflante à gaz d'échappement supplémentaire.

3. Procédé pour faire fonctionner un moteur à combustion interne (1), dans lequel des gaz d'échappement du moteur à combustion interne (1) sont évacués au moyen d'une conduite d'évacuation (4) et sont guidés au moins en partie avec une conduite de recirculation de gaz d'échappement (6), qui est en liaison fluidique avec la conduite d'évacuation (4), dans une conduite de distribution d'air (8), cette conduite de distribution d'air (8) acheminant de l'air aux éléments de travail (12) du moteur à combustion interne (1), des gaz d'échappement étant guidés par le biais d'un deuxième dispositif de turbosoufflante à gaz d'échappement (24) et d'un premier dispositif de turbosoufflante à gaz d'échappement (22), le premier dispositif de turbosoufflante à gaz d'échappement (22) et le deuxième dispositif de turbosoufflante à gaz d'échappement (24) étant disposés en série par rapport à une conduite d'alimentation (32) en air de suralimentation, des gaz d'échappement étant guidés au moins temporairement par le biais d'un troisième dispositif de turbosoufflante à gaz d'échappement (26), le troisième dispositif de turbosoufflante à gaz d'échappement (26) étant disposé parallèlement au deuxième dispositif de turbosoufflante à gaz d'échappement (24) et, par rapport à une conduite d'alimentation (32) en air de suralimentation, en série avec le premier dispositif de turbosoufflante à gaz d'échappement (22), le deuxième dispositif de turbosoufflante à gaz d'échappement (24) et le troisième dispositif de turbosoufflante à gaz d'échappement (26) étant connectés et déconnectés indépendamment l'un de l'autre, le flux de gaz d'échappement parvenant au deuxième et au troisième dispositif de turbosoufflante à gaz d'échappement (24, 26) étant modifié au moins temporairement au moyen de dispositifs de soupape (34, 36), et l'alimentation en gaz d'échappement au deuxième et au troisième dispositif de turbosoufflante à gaz d'échappement (24, 26) étant commandée en fonction de propriétés de fonctionnement du moteur à combustion interne (1) en mode de travail, de telle sorte que dans un premier état de fonctionnement (I), seuls le premier (22) et le deuxième (24) dispositif de turbosoufflante à gaz d'échappement soient parcourus par des gaz d'échappement, dans un deuxième état de fonctionnement (II), seuls le premier (22) et le troisième (26) dispositif de turbosoufflante à gaz d'échappement soient parcourus par des gaz d'échappement et, dans un troisième état de fonctionnement (III), le premier (22), le deuxième (24) et le troisième (26) dispositif de turbosoufflante à gaz d'échappement soient parcourus par des gaz d'échappement,
**caractérisé en ce que**
pendant une transition entre deux états de fonctionnement (I, II, III), l'alimentation en gaz d'échappement dans le dispositif de distribution d'air (8) est au moins temporairement réduite et le deuxième dispositif de turbosoufflante à gaz d'échappement (24) et le troisième dispositif de turbosoufflante à gaz d'échappement (26) présentent des dimensions différentes.

4. Procédé selon la revendication 3, **caractérisé en ce que**, dans le temps, le deuxième état de fonctionnement (II) suit le premier état de fonctionnement (I) et le troisième état de fonctionnement (III) suit le deuxième état de fonctionnement (II).
